# EUROPEAN PATENT SPECIFICATION

(11) **EP 3 514 208 B1**
(45) Date of publication and mention of the grant of the patent: **28.02.2024**
(21) Application number: 17850704.2
(22) Date of filing: 31.08.2017
(51) Int. Cl.: C09D 11/102, C09D 11/106, C09D 11/033, C09D 11/037

(54) **PRINTING INK COMPOSITON FOR FILM AND USE THEREOF**
DRUCKFARBENZUSAMMENSETZUNG FÜR FOLIE UND VERWENDUNG DAVON
COMPOSITION D'ENCRE D'IMPRIMERIE DESTINÉE À UN FILM, ET SON UTILISATION

(30) Priority: 13.09.2016 JP 2016178716
(43) Date of publication of application: 24.07.2019
(73) Proprietor: Sakata INX Corporation, Osaka-shi, Osaka 550-0002 (JP)
(72) Inventor: HARADA, Junichi, Osaka-shi Osaka 550-0002 (JP); KOBAYASHI, Kyohei, Osaka-shi Osaka 550-0002 (JP)
(74) Representative: Grünecker Patent- und Rechtsanwälte PartG mbB
(86) International application number: PCT/JP2017/031375
(87) International publication number: WO 2018/051801

(56) References cited:
- WO-A1-2018/056293
- WO-A1-2018/110664
- CN-B- 103 627 249
- JP-A- H09 118 855
- JP-A- H09 316 156
- JP-A- 2005 298 618
- JP-A- 2011 122 064
- JP-A- 2011 162 663
- JP-A- 2012 001 672
- JP-A- 2014 214 246
- JP-A- 2015 108 056
- JP-A- 2015 227 393
- JP-A- 2016 043 600

## Description

### Technical Field

The present invention relates to an ink composition for film printing and an application thereof. To be more specific, it relates to an ink composition for film printing that demonstrates excellent adhesive property when printed on a film, while also allowing a laminated product produced by laminating the ink composition to demonstrate excellent laminatability.

### Background Art

In recent years, composite films produced by depositing metal, silica, alumina, and other inorganic oxides, or layering barrier resins constituted by ethylene-vinyl acetate copolymer, polyvinyl alcohol, etc., on the surfaces of various plastic materials, are widely used as soft packaging materials in such fields as food and drugs where the products should be protected from oxidization by air or alteration/degradation due to moisture. These composite films function to prevent oxygen in air or water vapor from permeating through them, and thus can be used to manufacture high-performance packaging containers offering so-called "gas barrier property" and "aroma retention property."

Particularly in the field of food packaging, gas barrier property is an important characteristic for maintaining the freshness, taste, and texture of food for a long time. The aforementioned composite films on which inorganic oxides are deposited or barrier resins are layered, offer excellent features such as transparency that gives the consumers peace of mind as they can see what is inside, and microwave safety that allows heating and cooking of the contents without opening the bag.

Amidst the growing concerns for food shortage in the future, attempts to extend the best-before dates and use-by dates of food products to reduce their wastage as much as possible, are beneficial for society. From these viewpoints, it is considered that a core technology will emerge from utilizing the aforementioned composite films.

Now, when these packaging containers are manufactured, inks are used to print the contents on the packaging containers, and more recently to improve design in an active effort to make the products look more attractive to enhance the willingness of consumers to purchase the products. Primarily two types of printing are used here, namely, surface printing and reverse printing, depending on whether the exterior side or interior side of the packaging container is printed.

Surface printing involves printing on the exterior side of the packaging container, which means the ink does not contact the contents and thus relatively good hygiene is ensured even with simple structures. However, the printed surface is subject to rubbing and direct contact with hot plates in the bag-making or sealing process, and therefore the ink must adhere well to the base material and manifest rub resistance, heat resistance, etc.

In reverse printing, the ink is printed on the interior side of the packaging container, after which a thin polymer film is laminated over an adhesive or anchor agent on the printed surface as necessary. Such lamination process prevents the ink from contacting the contents on the interior side of the packaging container, so excellent hygiene is ensured so long as the solvents, etc., in the ink are thoroughly removed.

This lamination process can also be applied on the surface that has been printed by surface printing, as it prevents the printed surface from being exposed to the outside.

In addition, the lamination process allows layering of multiple functional films and is therefore used in boiling/retort applications in addition to making standard food packaging bags for snacks, etc.

When a composite film, on which an inorganic oxide is deposited or barrier resin composition is layered, as mentioned above, is used in a packaging container, the deposition layer or barrier resin composition layer is placed on the interior side of the packaging container to protect the deposition layer or barrier resin composition layer. So, while the ink is rarely printed on the deposition layer or barrier resin composition layer when surface printing is used, good adhesion property to the deposition layer or barrier resin composition layer becomes another requirement for the ink if the deposition layer or barrier resin composition layer is provided on the exterior side or both sides of the composite film.

With reverse-printed packaging containers, on the other hand, the deposition layer or barrier resin composition layer becomes the ink printing surface in most cases. Reverse-printed packaging containers are also used in diverse applications, some of which have very high performance requirements. Among these, gas barrier is one key property intended by these applications, so opportunities for using composite films on which inorganic oxides are deposited or barrier resins are layered are expected to increase going forward.

However, such inorganic oxide layer or barrier resin composition layer provided to add gas barrier property has a relatively dense structure at its surface, which is normally the surface of the interior-side layer of the packaging bag, and consequently a printing layer formed on the surface of this layer does not adhere sufficiently. For this reason, a very thin layer is sometimes formed as an anchor layer on the surface of this layer, but such layer is too thin to be formed sufficiently uniformly, and consequently it is difficult to cause the printing layer to adhere sufficiently, even if it is formed on the anchor layer. Any such attempt to improve the adhesion property, therefore, can cause blurriness and other printing problems. It should be noted that the same resins used in barrier resin composition layers do not create very dense surfaces if they are used in non-barrier resin compositions.

Now, "polyamide-nitrified cotton"-based resins are used as binder resins for inks in surface printing, while polyurethane-based resins are used in reverse printing; generally, however, these resins tend to result in poor ink adhesion property to the deposition layer or barrier resin composition layer. This tendency is particularly prominent with inks that use titanium oxide and other white pigments. This is why the inventors of the present invention have been working to develop an ink composition that adheres well to various composite films having gas barrier property.

For reverse printing inks using polyurethane-resin-based binders, for example, an art of compounding a hydroxy carbonic acid whose number-averaged molecular weight is in a range of 200 to 500, acid value is in a range of 20 to 350, and hydroxyl value is in a range of 20 to 350, in order to improve adhesion property to metal aluminum deposition films (refer to Patent Literature 1, for example), and an art of introducing a silane coupling agent and an isocyanate hardening agent consequently to a urethane resin molecule in order to improve adhesion property to silica deposition films (refer to Patent Literatures 2 and 3, for example), have been proposed.

In Patent Literature 4, a polyurethane resin is proposed for use on silica or alumina deposition films, but its adhesion property to these films is not yet sufficient. Also, it has not been studied for use on composite films on which barrier resins are layered. Patent Literature 5 discloses a production method of an ink composition for a laminate, the ink composition essentially comprises: a binder resin comprising a polyoxyalkylene-containing polyurethane resin and a vinyl chloride vinyl acetate copolymer resin having a hydroxyl group; a colorant; and an organic solvent other than aromatic organic solvents. The method includes the steps of preliminarily dispersing the colorant in the vinyl chloride vinyl acetate copolymer resin having a hydroxyl group, and then mixing with the polyoxyalkylene-containing polyurethane resin. Patent Literature 6 discloses a laminate ink composition for soft packaging comprising binder resin comprising polyurethane resin, polyvinyl pyrrolidone, colorant and organic solvent as an essential component. Patent Literature 7 discloses a laminate ink composition for flexible packaging consisting essentially of a binder resin, a colorant and an organic solvent other than an aromatic organic solvent. The laminate ink composition for the flexible packaging is characterized as consisting essentially of a polypropylene glycol (hereinafter abbreviated to PPG)-containing polyurethane resin and a vinyl chloride-vinyl acetate copolymer resin having hydroxy groups as the binder resin. Patent Literature 8 discloses a compound printing ink, in particular an ester-soluble polyurethane compound printing ink and a preparation method thereof. The compound printing ink comprises the following components by weight percentage: 27 to 32 percent of modified polyurethane resin, 6 to 15 percent of vinyl chloride-vinyl acetate copolymer liquid, 8 to 33 percent of a pigment, 0.4 to 0.8 percent of a dispersing agent, 0.3 to 0.5 percent of wax powder, 0.2 to 0.8 percent of an antistatic agent, 0.2 to 0.5 percent of an anti-precipitating agent, 0.5 to 1.5 percent of an adhesive force reinforcing agent, 10 to 25 percent of propyl acetate, 5 to 15 percent of ethyl acetate, and 10 to 20 percent of butyl acetate. Patent Literature 9 discloses an ink composition for lamination printing on soft packaging. The ink composition contains a pigment, a binder resin, and an organic solvent as main components, wherein the binder resin contains: a polymeric polyester diol comprising an acidic component and a glycol component of which 20 mass% or more is 2-methyl-1,3-propanediol; a polyurethane resin which comprises an organic diisocyanate compound containing alicyclic diisocyanate, has a primary amino group and/or a secondary amino group at terminal ends thereof, and has an amine value; and at least one selected from among a nitrocellulose, a cellulose acetate propionate resin, a cellulose acetate butyrate resin, and a vinyl chloride-vinyl acetate copolymer. Patent Literature 10 discloses a printing ink composition for a soft packaging laminate comprising a pigment, a binder resin, and an organic solvent. Said binder resin includes: a polyurethane resin including a biomass polyurethane resin obtained by reacting a bio-polyester polyol component and an organic diisocyanate component; and a primary or secondary amino group. Said bio-polyester polyol component comprises a dicarboxylic acid, a specific amount of an organic acid having three or more active hydrogen groups of a specific molecular weight, and a diol. Said dicarboxylic acid and/or said diol are/is of plant origin, and the NCO group/OH group ratio is 1.2 to 3.0. The biomass polyurethane resin content of the polyurethane resin is 5 to 100 mass%. Patent Literature 11 discloses a resin, which is prepared by reacting a polyesterpolyol comprising a dibasic acid (anhydride) and a 3-10 C alkanediol and having a number-average molecular weight of 1,500-3,400 with a glycol or a polyesterpolyol having a number-average molecular weight of 50-500, a tert. amine having at least two hydroxyl groups, an organic diisocyanate, and an amine chain extender. The provided printing ink contains this resin as the binder. Patent Literature 12 discloses a solvent-based gravure ink containing: a polyurethane resin obtained through a reaction of polymer polyol, a polyisocyanate compound, and a chain extender; titanium oxide; and an organic solvent. Patent Literature 13 discloses a solvent type gravure printing ink having a polyurethane resin as a main binder and contains a quaternary ammonium salt having four alkyl groups R1, R2, R3 and R4 bonded to N, wherein R1 denotes a 8-22C alkyl group, R2 and R3 each denote a methyl group and R4 denotes a 1-18C alkyl group or a benzyl group. Patent Literature 14 discloses a laminate ink composition for soft packaging which comprises: a polyurethane resin (A) using an amine (a) represented by the general formula (1) as a chain extender; a polyurethane resin (B) using an aliphatic diamine and/or an alicyclic diamine as a chain extender; a coloring agent; and an organic solvent other than an aromatic organic solvent. Patent Literature 15 discloses a white ink film layer, formed by a white ink composition for gravure printing containing a polyurethane resin, a vinyl chloride/vinyl acetate copolymer, a white inorganic filler, and an organic solvent, and a color ink film layer, formed by a color ink composition for gravure printing containing a polyurethane resin, a cellulose derivative, a filler other than a white one, and an organic solvent, which are laminated in this order. Patent Literature 16 discloses a printing ink composition for the alumina vapor-deposited film containing a pigment, a binder resin, and an organic solvent, wherein the binder resin contained therein is a polyurethane resin (A) and polyvinyl chloride vinyl acetate copolymer resin (B) in a ratio of (A)/(B)=95/5-40/60 (mass ratio). Patent Literature 17 discloses a printing ink composition consisting mainly of (A) a pigment, (B) a binder resin and (C) an organic solvent, and also contains (D) 0.1-10wt.%, based on the whole weight of the final composition, of a hydroxycarboxylic acid 200-5000 in number-average molecular weight, 20-350 in acid value and 20-350 in hydroxyl value. The component B is pref. a polyamide resin-cellulose derivative-mixed type binder resin at the weight ratio of the polyamide resin to the cellulose derivative of (1 :0.1) to (1:0.5). The component D is pref. a hydroxycarboxylic acid because of its compatibility with the component A and solubility to the component C, which is prepared by reaction between a polycarboxylic ahydride such as trimellitic anhydride and a polyol compound under the presence of an excess hydroxyl group.

As described above, currently no general-purpose art is available for improving adhesion property to various inorganic oxide deposition films and composite films on which barrier resin compositions are layered.

Also, in the field of processed food, sometimes the packaging material is retort-treated at high temperature together with the contents; however, none of the prior arts mentioned above offers sufficient fitness for retort treatment.

### Background Art Literature

### Patent Literature

Patent Literature 1: Japanese Patent Laid-open No. 09-118855
Patent Literature 2: Japanese Patent Laid-open No. 2001-002971
Patent Literature 3: Japanese Patent Laid-open No. 2002-030239
Patent Literature 4: Japanese Patent No. 5937285, Specification
Patent Literature 5: Japanese Patent Laid-open No. 2015-108056
Patent Literature 6: Japanese Patent Laid-open No. 2015-227393
Patent Literature 7: Japanese Patent Laid-open No. 2005-298618
Patent Literature 8: CN 103627249 B
Patent Literature 9: WO 2018/056293 A1
Patent Literature 10: WO 2018/110664 A1
Patent Literature 11: JP H09 316156 A
Patent Literature 12: Japanese Patent Laid-open No. 2011-122064
Patent Literature 13: Japanese Patent Laid-open No. 2011-162663
Patent Literature 14: Japanese Patent Laid-open No. 2014-214246
Patent Literature 15: Japanese Patent Laid-open No. 2016-043600
Patent Literature 16: Japanese Patent Laid-open No. 2012-001672
Patent Literature 17: JP H09 118855

### Summary of the Invention

### Problems to Be Solved by the Invention

As described above, arts for allowing long-term preservation of fresh produce as well as processed foods using packaging containers having high gas barrier property are beneficial to society. In addition, the demand for processed foods is growing with the increase in the elderly population, and the importance of packaging containers continues to rise. On the other hand, arts using decorative ink designs to enhance the willingness of consumers to purchase provide the manufacturers of food, packaging materials, etc., with funds they can use to drive further research on long-term preservation.

Accordingly, an object of the present invention is to provide an ink composition for film printing that allows decorative printing by offering excellent printability characteristics and adhesion property when printed on a clear deposition film having an inorganic oxide deposited on its surface, or a composite film on which a barrier resin composition is layered, while also demonstrating excellent laminatability and retortability when laminated, and therefore expanding the fields in which the ink composition can be applied for use on packaging containers.

### Means for Solving the Problems

After studying in earnest to achieve the aforementioned object, the inventors of the present invention found that all of the problems could be solved by compounding at a specific ratio and using as a binder resin for an ink composition for film printing (it may be hereinafter simply referred to as "Ink Composition"), a polyurethane resin having specific functional groups and a "vinyl chloride-vinyl acetate"-based copolymer resin, and consequently completed the present invention.

The present invention encompasses the following.
(1) An ink composition for film printing containing a white pigment, a binder resin, and an organic solvent, wherein the white pigment is titanium oxide, and wherein the ink composition for film printing is such that: the binder resin contains a polyurethane resin (A) and a "vinyl chloride-vinyl acetate"-based copolymer resin (B); the polyurethane resin (A) contains a polyurethane resin that has a hydroxyl group and also has at its end at least one type of amino group selected from primary amino group, secondary amino group, and tertiary amino group; (A)/(B) = 70/30 to 60/40 (ratio by mass); and wherein the film contains at least one type of layer selected from alumina layer, silica layer, polyvinyl alcohol layer, polyvinylidene chloride layer, and acrylic polymer layer.
(2) The ink composition for film printing according to (1), wherein the amine value of the polyurethane resin (A) is 0.1 to 10 mgKOH/g.
(3) The ink composition for film printing according to (1) or (2), wherein the organic solvent is a mixed solvent constituted by ester-based organic solvent, alcohol-based organic solvent, and ketone-based organic solvent.
(4) The ink composition for film printing according to (1) or (2), wherein the organic solvent is a mixed solvent constituted by ester-based organic solvent and alcohol-based organic solvent.
(5) A printed matter obtained by printing the ink composition for film printing according to any one of (1) to (4), on the film.
(6) A laminated product obtained by printing the ink composition for film printing according to any one of (1) to (4), on the film, and then laminating the printed film.

### Effects of the Invention

The present invention is characterized in that it uses an ink composition intended exclusively for printing on films having specific layers, in which a polyurethane resin having specific functional groups and a "vinyl chloride-vinyl acetate"-based copolymer resin have been compounded at a specified ratio for use as a binder resin. This way, effects such as good printability characteristics and adhesion property are achieved when the printing ink composition is printed on an inorganic oxide deposition film or barrier resin composition layered film, as well as good laminatability and retortability when the printing ink composition is laminated.

### Mode for Carrying Out the Invention

The following explains the ink composition for film printing proposed by the present invention, and its applications, in greater detail.

First, the ink composition for film printing proposed by the present invention is explained.

The ink composition proposed by the present invention contains a pigment, a binder resin, and an organic solvent.

### <Pigment>

For the aforementioned white pigment, titanium oxide is used.

The content of any such pigment in the ink composition is normally approx. 1 to 50 percent by mass.

### <Binder Resin>

The aforementioned binder resin contains a polyurethane resin and a "vinyl chloride-vinyl acetate"-based copolymer resin.

### (Polyurethane Resin (A))

For the polyurethane resin contained in the aforementioned polyurethane resin (A), which has a hydroxyl group and also has at its end at least one type of amino group selected from primary amino group, secondary amino group, and tertiary amino group, preferably a polyurethane resin is used which is obtained by causing an organic diisocyanate compound to react with a high-molecular diol compound to synthesize a urethane prepolymer and then reacting a chain extender and/or reaction terminator with it as necessary.

The aforementioned organic diisocyanate compound may be, for example, tolylene diisocyanate or other aromatic diisocyanate compound, 1,4-cyclohexane diisocyanate, isophorone diisocyanate, or other alicyclic diisocyanate compound, hexamethylene diisocyanate or other aliphatic diisocyanate compound, α,α,α',α'-tetramethyl xylylene diisocyanate or other araliphatic diisocyanate compound, or the like. Any of these organic diisocyanate compounds may be used alone, or two or more types may be combined. Among these, an alicyclic diisocyanate, aliphatic diisocyanate, or araliphatic diisocyanate is more preferred.

The aforementioned high-molecular diol compound may be, for example, polyalkylene glycol such as polyethylene glycol and polypropylene glycol; a polyether diol compound such as ethylene oxide adduct, propylene oxide adduct, and other alkylene oxide adduct of bisphenol A; polyester diol obtained by causing one, two, or more types of dibasic acids including adipic acid, sebacic acid, and phthalic anhydride, to undergo condensation reaction with one, two, or more types of glycols including ethylene glycol, propylene glycol, 1,4-butane diol, neopentyl glycol, and 3-methyl-1,5-pentan diol; polycaprolactone diol, or other polyester diol compound. Any of these high-molecular diol compounds may be used alone, or two or more types may be combined.

Furthermore, one, or two or more types of low-molecular diol compounds including 1,4-pentane diol, 2,5-hexane diol, 3-methyl-1,5-pentane diol, and other alkane diols, ethylene glycol, propylene glycol, 1,4-butane diol, and 1,3-butane diol, may also be combined and used in addition to the aforementioned high-molecular diol compounds.

It should be noted that, if a mixed solvent constituted by ester-based solvent and alcohol-based solvent is used as the below-mentioned organic solvent, then preferably a polyether diol compound is used as the high-molecular diol compound because doing so tends to increase the solubility of the obtained polyurethane resin, which in turn allows designing a wide range of inks according to the required performances.

Also, the use ratio of the organic diisocyanate compound and the high-molecular diol compound is such that the equivalent ratio of isocyanate group to hydroxyl group (isocyanate index) is normally in a range of 1.2:1 to 3.0:1 or preferably in a range of 1.3:1 to 2.0:1. If the aforementioned isocyanate index is smaller than 1.2, the polyurethane resin tends to become flexible and its blocking resistance, etc., may become low when the ink composition under the present invention is printed, in which case other hard resin may have to be combined.

For the aforementioned chain extender, any known chain extender used in polyurethane resins serving as ink binders can be used, where examples include ethylene diamine, propylene diamine, tetramethylene diamine, hexamethylene diamine, and other aliphatic diamines, isophorone diamine, 4,4'-dicyclohexyl methane diamine, and other alicyclic diamines, toluylene diamine and other aromatic diamines, xylene diamine and other araliphatic diamines, N-(2-hydroxy ethyl) ethylene diamine, N-(2-hydroxy ethyl) propylene diamine, N-N'-di (2-hydroxy ethyl) ethylene diamine, and other hydroxyl group-containing diamines, ethylene glycol, propylene glycol, 1,4-butane diol, neopentyl glycol, diethylene glycol, triethylene glycol, and other diol compounds.

Furthermore, diethylene triamine, triethylene tetramine, and other polyamines may also be added, to the extent that the polyurethane resin does not gelate.

For the aforementioned reaction terminator, any known reaction terminator used in polyurethane resins serving as ink binders can be used, where examples include n-propyl amine, n-butyl amine, and other monoalkyl amines, di-n-butyl amine and other dialkyl amines, monoethanol amine, diethanol amine, and other alkanol amines, ethanol and other monoalcohols.

The aforementioned polyurethane resin has a hydroxyl group, and it also has at its end at least one type of amino group selected from primary amino group, secondary amino group, and tertiary amino group. Because it has these specific functional groups, the ink composition for film printing proposed by the present invention demonstrates excellent printability characteristics and adhesion property on inorganic oxide deposition films and barrier resin layered films. Furthermore, the ink composition exhibits excellent laminatability when laminated.

In addition, preferably the amine value of the polyurethane resin is in a range of 0.1 to 10 mgKOH/g. If the amine value is lower than 0.1, printability characteristics and adhesion property of the ink composition for film printing proposed by the present invention, on inorganic oxide deposition films and barrier resin layered films, drops, and its laminatability also drops. If the amine value exceeds 10, on the other hand, blocking resistance drops.

It should be noted that, in the Specification of the present application for patent, the aforementioned amine value refers to an amine value per 1 g of solids content, measured using an aqueous solution of 0.1 N hydrochloric acid according to the potentiometric titration method (using COMTITE (AUTO TITRATOR COM-900, BURET B-900, and TITSTATION K-900) manufactured by Hiranuma Sangyo, for example) and expressed by an equivalent amount of potassium hydroxide.

For the method for manufacturing the polyurethane resin, any known manufacturing method of polyurethane resin may be employed as is by using the aforementioned materials. Also, printability characteristics and laminatability can be adjusted by combining the respective components as deemed appropriate, because the hardness of the obtained polyurethane resin varies as the molecular weight, chemical structure, and equivalent ratio of each component vary.

The mass-averaged molecular weight of the polyurethane resin is preferably 10000 to 70000, or more preferably 20000 to 60000.

To add appropriate flexibility and increase lamination strength, the polyurethane resin (A) may further contain a polyurethane resin that has no urea bonds, or a urethane resin that does not contain any hydroxyl group and/or any type of amino group such as primary amino group, secondary amino group, or tertiary amino group at its end.

### ("Vinyl Chloride-Vinyl Acetate"-based Copolymer Resin (B))

For the aforementioned "vinyl chloride-vinyl acetate"-based copolymer resin (B), a resin whose essential components are a vinyl chloride monomer and a vinyl acetate, as necessary using a vinyl propionate, vinyl monochloroacetate, vinyl versatate, vinyl laureate, vinyl stearate, vinyl benzoate, or other aliphatic vinyl monomer, or a monomer having hydroxyl or other functional groups, being manufactured by any known method, may be used.

Preferably the mass-averaged molecular weight of the "vinyl chloride-vinyl acetate"-based copolymer resin (B) is 10000 to 70000.

Such "vinyl chloride-vinyl acetate"-based copolymer resin (B) may be a commercial product, such as SOLBIN A, AL, TA5R, TA2, TA3, TAO, TAOL, C, CH, CN, or CNL manufactured by Nissin Chemical, for example.

It should be noted that, from the viewpoint of ensuring solubility in the below-mentioned organic solvent used in the ink composition for film printing proposed by the present invention, and also ensuring printability characteristics, the "vinyl chloride-vinyl acetate"-based copolymer resin may also have various functional groups in its molecule.

Additionally, if a large quantity of polar solvent is used as the organic solvent, the "vinyl chloride-vinyl acetate"-based copolymer may have a hydroxyl group, etc., in its molecule, and among the commercial products of such "vinyl chloride-vinyl acetate"-based copolymers, use of SOLBIN A, AL, TA5R, TA2, TA3, TAO, TAOL, etc., is preferred, for example.

The ink composition for film printing proposed by the present invention contains the polyurethane resin (A) and the "vinyl chloride-vinyl acetate"-based copolymer resin (B) at (A)/(B) = 70/30 to 60/40 (ratio by mass). As it contains the polyurethane resin (A) and the "vinyl chloride-vinyl acetate"-based copolymer resin (B) at these percentages, the ink composition for film printing proposed by the present invention demonstrates excellent printability characteristics and adhesion property on inorganic acid deposition films and barrier resin layered films. Furthermore, it exhibits excellent laminatability if laminated. If "(A)/(B)" above exceeds 70/30, the percentage of the "vinyl chloride-vinyl acetate"-based copolymer resin (B) decreases, and sufficient adhesion property to the aforementioned films is not achieved. If "(A)/(B)" above is lower than 60/40, on the other hand, the percentage of the "vinyl chloride-vinyl acetate"-based copolymer resin (B) increases, and printed matters formed using the ink composition proposed by the present invention become hard, again resulting in insufficient adhesion property to the aforementioned films.

Also, preferably the total content of polyurethane resin (A) and "vinyl chloride-vinyl acetate"-based copolymer resin (B) in the ink composition proposed by the present invention is 5 to 30 percent by mass.

### (Other Resins)

Furthermore, other binder resins such as cellulose resins, vinyl-based copolymers, polyamide resins, etc., may be added to the ink composition proposed by the present invention, as auxiliaries, to the extent that doing so does not lower the performances intended by the present invention.

### <Organic Solvent>

For the aforementioned organic solvent, acetone, methyl ethyl ketone, methyl isobutyl ketone, or other ketone-based organic solvent, methyl acetate, ethyl acetate, n-propyl acetate, n-butyl acetate, isobutyl acetate, or other ester-based organic solvent, methanol, ethanol, n-propanol, isopropanol, butanol, or other alcohol-based organic solvent, toluene, methyl cyclohexane, or other hydrocarbon-based organic solvent may be used, for example.

In light of environmental concerns of late, preferably a mixed solvent constituted by ester-based organic solvent, alcohol-based organic solvent, and ketone-based organic solvent, or a more environmentally-friendly mixed solvent constituted by ester-based organic solvent and alcohol-based organic solvent, is used.

### <Other Materials>

Various additives, such as pigment dispersant, anti-static agent, wax, leveling agent, surface active agent, and plasticizer, may be added further to the ink composition for film printing proposed by the present invention.

Regarding how the ink composition is manufactured using the aforementioned constituent materials, any know method may be used. To be specific, the ink composition may be obtained by, for example, using a high-speed mixer, ball mill, sand mill, attritor, etc., to knead a mixture of pigment, binder resin, organic solvent, and if necessary, pigment dispersant, etc., and then adding and mixing the remainder of specified materials.

Next, printed matters obtained by printing the ink composition for film printing proposed by the present invention, and their applications, are explained.

### <Film>

The ink composition for film printing proposed by the present invention takes, as base materials, barrier films having metal or metal oxide deposition layers as well as barrier films having barrier resin composition layers, and it performs well when printed on these metal or metal oxide deposition layers and barrier resin composition layers.

For the barrier films, films that each comprise only a layer of a barrier resin composition containing polyvinylidene chloride, polyvinyl alcohol, ethylene-vinyl acetate copolymer, etc., or barrier resin layered films that are each formed by applying or otherwise layering such barrier resin composition layer on a base material constituted by any of various resin films, may be used. In addition, deposition films that are each formed by depositing a metal or alumina, silica, or other metal oxide on a base material constituted by any of various plastic films, may be used.

It should be noted that the ink composition for film printing proposed by the present invention may be printed directly on any of the aforementioned metal or metal oxide deposition layers and barrier resin composition layers, or it may be printed on a so-called anchor layer and/or resin layer provided between it and the aforementioned layers. Considering the fact, however, that the present invention is used in applications where flexibility and other properties of the film itself are taken advantage of, preferably the ink composition is printed without any resin layer provided under it for forming a printing layer.

The aforementioned base material constituted by a resin film may be, for example, a polyethylene terephthalate, polyethylene naphthalate, or other polyester film, polypropylene film, polyethylene film, or other polyolefin film, polyamide film, polyvinyl chloride film, polyacrylonitrile film, polycarbonate film, or the like.

For the aforementioned resin film, an oriented or unoriented film which, if necessary, contains an anti-static agent, ultraviolet protective agent, and other additives, or has been corona-treated or plasma-treated on the surface of base material, may also be used.

Examples of the barrier resin layered films include, among others, A-OP and V-OP manufactured by Mitsui Chemicals Tohcello, CENESSY KOP, CENESSY XOP, CENESSY XOP-S, CENESSY KET, CENESSY KON, K CELLUSI, and KM CELLUSI manufactured by Daicel Value Coating, BESELA manufactured by Toppan Printing, and BONYL-K manufactured by Kohjin Film & Chemicals.

Also, regarding how the metal oxide is deposited on the base material of resin film, any known method may be used, such as the vacuum deposition method employing an electron beam heating, resistance heating, induction heating, or other heating means, or the sputtering method, plasma vapor deposition method, ion plating method, etc.

The thickness of the aforementioned layer constituted by a metal oxide, although not limited in any way, is in a range where the layer has transparency and property to block oxygen, water vapor, and other gasses, such as 4 to 350 nm, or preferably 8 to 160 nm.

Specific examples of such deposition films include, among others, FINE BARRIER A manufactured by Reiko, TEC BARRIER manufactured by Mitsubishi Plastics, MOS manufactured by Oike & Co., GL-AE manufactured by Toppan Printing, and IB-PET-PUB manufactured by Dainippon Printing.

### <Printed Matter>

Desired printed matters can be obtained by printing the ink composition for film printing proposed by the present invention, on the aforementioned deposition films and barrier resin composition layered films using the gravure printing method, flexographic printing method, etc. The ink composition may be printed directly on the inorganic oxide deposition surface or barrier resin composition layer surface of any such inorganic oxide deposition film or barrier resin composition layered film, or it may be printed on an anchor coating layer, primer layer, etc., provided on the inorganic oxide deposition surface or barrier resin composition layer surface. Printed matters obtained by printing with the ink composition for film printing proposed by the present invention, are also a part of the present invention.

It should be noted that a printed matter obtained through the aforementioned method may be made into a laminated product by laminating its printed surface as described below; if the printed matter is produced by surface printing, for example, any traditional, known overcoating agent may be coated on top to protect the inorganic oxide deposition layer or barrier resin composition layer, and the coated printed matter may be used in the manufacture of packaging containers.

### <Laminated Product>

In the case of a printed matter by reverse printing, a polymer called sealant may be layered via lamination on top of the printed surface of the printed matter, for use in the manufacture of packaging containers offering higher functionality. It should be noted that laminated products obtained by printing the ink composition for film printing proposed by the present invention on inorganic oxide deposition films and barrier resin composition layered films, and then laminating the printed films, are also a part of the present invention.

Now, primarily two methods are used to layer the sealant. One is extrusion lamination whereby an anchor coating agent (titanium-based, urethane-based, imine-based, polybutadiene, etc., for example) is applied on the printed surface as necessary, and then a thin film of hot-melt polymer (low-density polyethylene, ethylene-vinyl acetate copolymer, polypropylene, etc., for example) is layered on top. The other is dry lamination whereby an adhesive (urethane-based, isocyanate-based, etc., for example) is coated on the printed surface, after which an unoriented plastic film (unoriented polyethylene film, unoriented polypropylene film, etc., for example) is layered on top. In addition, a polymer layer offering various functions may also be provided underneath the sealant.

The laminated product obtained by such method eventually becomes a packaging container once its sealant surfaces are sealed together using a heat sealer, etc.

### Examples

The present invention is explained in greater detail below using examples, but the present invention is not limited to these examples. It should be noted that, unless otherwise specified, "%" indicates "percent by mass," while "part" indicates "part by mass."

### (Manufacture of Ink Compositions for Film Printing)

### Polyurethane Resin Varnish 1

Into a four-neck flask equipped with agitator, cooling tube, and nitrogen gas introduction tube, 100 parts by mass of 3-methyl-1,5-pentylene adipate diol of 2000 of average molecular weight, 100 parts by mass of polypropylene glycol of 2000 of average molecular weight, and 44.4 parts by mass of isophorone diisocyanate were loaded and reacted together for 6 hours at 100 to 105°C while introducing nitrogen gas. After the flask was let cool to near room temperature, 518 parts by mass of ethyl acetate and 91 parts by mass of isopropyl alcohol were added, after which 15.6 parts by mass of isophorone diamine were added to extend the chain, and then 0.49 parts by mass of monoethanol amine and 0.48 parts by mass of ethylene diamine were added to stop the reaction, to obtain Polyurethane Resin Varnish 1 (solids content 30 percent by mass, viscosity 15 ps/25°C, amine value 1.7 mgKOH/g).

### Polyurethane Resin Varnish 2

Into a four-neck flask equipped with agitator, cooling tube, and nitrogen gas introduction tube, 100 parts by mass of 3-methyl-1,5-pentylene adipate diol of 2000 of average molecular weight, 100 parts by mass of polypropylene glycol of 2000 of average molecular weight, and 44.4 parts by mass of isophorone diisocyanate were loaded and reacted together for 6 hours at 100 to 105°C while introducing nitrogen gas. After the flask was let cool to near room temperature, 518 parts by mass of ethyl acetate and 91 parts by mass of isopropyl alcohol were added, after which 15.6 parts by mass of isophorone diamine were added to extend the chain, and then 0.24 parts by mass of monoethanol amine and 0.7 parts by mass of ethylene diamine were added to stop the reaction, to obtain Polyurethane Resin Varnish 2 (solids content 30 percent by mass, viscosity 20 ps/25°C, amine value 2.6 mgKOH/g).

### Polyurethane Resin Varnish 3

Into a four-neck flask equipped with agitator, cooling tube, and nitrogen gas introduction tube, 100 parts by mass of 3-methyl-1,5-pentylene adipate diol of 2000 of average molecular weight, 100 parts by mass of polypropylene glycol of 2000 of average molecular weigh,t and 44.4 parts by mass of isophorone diisocyanate were loaded and reacted together for 6 hours at 100 to 105°C while introducing nitrogen gas. After the flask was let cool to near room temperature, 518 parts by mass of ethyl acetate and 91 parts by mass of isopropyl alcohol were added, after which 15.6 parts by mass of isophorone diamine were added to extend the chain, and then 1.1 parts by mass of monoethanol amine were added to stop the reaction, to obtain Polyurethane Resin Varnish 3 (solids content 30 percent by mass, viscosity 10 ps/25°C, amine value 0 mgKOH/g).

### Manufacturing Examples of Ink Compositions for Film Printing

Mixtures, each containing a pigment (titanium oxide R-960 manufactured by DuPont), one of aforementioned Polyurethane Resin Varnishes 1 to 3, and a "vinyl chloride-vinyl acetate"-based resin (SOLBIN TA-3 manufactured by Nissin Chemical), were kneaded using a paint conditioner manufactured by Red Devil, and then a solvent was added, to prepare Ink Compositions for Film Printing 1 to 8 shown in Table 1.

The ink compositions represented by Ink Compositions for Film Printing 1 to 8 obtained above were performance-evaluated according to the methods below, the results of which are shown in Table 2.

**Table 1**

| | Ink compositions for film printing | | | | | | | |
|---|---|---|---|---|---|---|---|---|
| | 1 | 2 | 3 | 4 | 5 | 6 | 7 | 8 |
| Pigment | 30 | 30 | 30 | 30 | 30 | 30 | 30 | 30 |
| Polyurethane Resin Varnish 1 | 20 | | | 24 | 15 | 30 | 27 | 12 |
| Polyurethane Resin Varnish 2 | | 20 | | | | | | |
| Polyurethane Resin Varnish 3 | | | 20 | | | | | |
| "Vinyl chloride-vinyl acetate"-based resin | 3 | 3 | 3 | 1.8 | 4.5 | 0 | 0.2 | 5.4 |
| Ethyl acetate | 37.6 | 37.6 | 37.6 | 35.4 | 40.4 | 32 | 34.2 | 42.1 |
| Isopropyl alcohol | 9.4 | 9.4 | 9.4 | 8.8 | 10.1 | 8 | 8.6 | 105 |
| Total | 100 | 100 | 100 | 100 | 100 | 100 | 100 | 100 |
| Compounding ratio of polyurethane resin / "vinyl chloride-vinyl acetate"-based resin | 66.7/33.4 | 66.7/33.4 | 66.7/33.4 | 80/20 | 50/50 | 100/0 | 97.6/2.4 | 40/60 |

### <Performance Evaluations of Ink Compositions>

### 1. Adhesion Property

Ink Compositions for Film Printing 1 to 8 above were each diluted by adding 50 parts of a diluent having the same composition as the solvent in Table 1 to adjust the viscosity, and then printed, at a printing speed of 50 m/min, on the treated surfaces of the various films shown in Table 2, using a gravure printer (manufactured by Higashitani Seisakusho K.K.) on which plates of 28 µm in plate depth had been set, to obtain the printed matters in Examples 1 to 10 and Comparative Examples 1 to 4. A piece of cellophane tape was pressed onto the printed surface of each obtained printed matter and then peeled, to evaluate the adhesion property based on the proportion of the area of ink film separated from the base.
A: There was no separation.
B: The separated area is smaller than 20%.
C: The separated area is 20% or larger.

### 2. Printability

### (Guide Roll Transfer)

Whether or not the ink would attach to the guide rolls (guide roll transfer would occur) after printing was tested according to the method below, to evaluate printability characteristics. It should be noted that "guide roll transfer" has negative effects on obtaining decorative printed matters because the ink that has attached to the guide rolls is retransferred onto and smears the printed surface.

Ink Compositions for Film Printing 1 to 8 above were each diluted by adding 50 parts of a diluent having the same composition as the solvent in Table 1 to adjust the viscosity, and then printed, at a printing speed of 100 m/min, on the treated surfaces of the various films shown in Table 2 under Examples 1 to 10 and Comparative Examples 1 to 4, which are surfaces on which a metal oxide layer had been formed or a barrier resin composition layer had been formed, using a gravure printer on which plates of 28 µm in plate depth had been set, and visually evaluated for dropout of the ink coating film of the printed matter due to the guide rolls of the gravure printer.

### (Blurriness)

"Blurriness" of printed areas may occur as the plates get clogged with ink after printing, according to the method below. Blurriness has negative effects on obtaining decorative printed matters.

Ink Compositions for Film Printing 1 to 8 above were each diluted by adding 50 parts of a diluent having the same composition as the solvent in Table 1 to adjust the viscosity, and then printed, at a printing speed of 100 m/min, on the treated surfaces of the various films shown in Table 2 under Examples 1 to 10 and Comparative Examples 1 to 4, using a gravure printer on which plates of 28 µm in plate depth had been set, and evaluated for printability characteristics based on the proportion of the blurry area caused by clogging of the plates with the ink.
A: There is no blurriness.
B: There is some blurriness.
C: There is significant blurriness.

### 3. Retortability

One day after printing, each printed matter was coated with a urethane adhesive (TAKERACK A-616/TAKENATE A-65, manufactured by Mitsui Chemicals & SKC Polyurethanes) by a quantity corresponding to 2.0 g/m² in solids content, after which an unoriented polypropylene film (RXC-22, thickness 60 µm, manufactured by Mitsui Chemicals Tohcello) was attached on top and then the printed matter was let stand for 3 days at 40°C, to obtain a dry laminate. This dry laminate was formed into a bag, which was then filled with a mixture of water accounting for 90 percent by weight and vegetable oil accounting for 10 percent by weight, after which the bag was sealed and immersed for 60 minutes in pressurized hot water at 120°C, to evaluate the retortability based on whether or not the lamination would be separated.
A: The lamination was not separated at all.
B: The lamination was separated in pin-hole shapes or long, thin strips.
C: The lamination was separated in long streaks over the entire surface.
D: The ink had attached to the guide rolls during printing and the retortability test could not be conducted.
   - : The printed film itself had no retortability, so the retortability test was not conducted.

**[Table 2]**

| | | Examples | | | | | | |
|---|---|---|---|---|---|---|---|---|
| | | 1 | 2 | Ref. Ex. 3 | 4 | 5 | 6 | 7 |
| Ink composition for film printing | | 1 | 2 | 4 | 5 | 1 | 1 | 1 |
| Printed film | | FINE BARRIER | FINE BARRIER | FINE BARRIER | FINE BARRIER | TEC BARRIER | A-OP | EMBLEM |
| Performance evaluations | Adhesion property | A | A | B | B | B | B | B |
| | Blurriness | A | A | A | A | A | A | A |
| | Guide roll transfer | None | None | None | None | None | None | None |
| | Retortability | A | A | A | A | A | - | - |

| | | Examples | | | Comparative Examples | | | |
|---|---|---|---|---|---|---|---|---|
| | | 8 | 9 | 10 | 1 | 2 | 3 | 4 |
| Ink composition for film printing | | 1 | 1 | 1 | 3 | 6 | 7 | 8 |
| Printed film | | BESELA | IB-PET | GL | FINE BARRIER | FINE BARRIER | FINE BARRIER | FINE BARRIER |
| Performance evaluations | Adhesion property | A | A | A | C | C | C | A |
| | Blurriness | A | A | A | A | A | A | C |
| | Guide roll transfer | None | None | None | None | Occurred | Occurred | None |
| | Retortability | A | A | A | B | A | A | A |

### The printed surfaces were the treated surfaces of the films listed below.

FINE BARRIER: PET film alumina-deposition-treated on one side (Product name: FINE BARRIER-AT-R, manufactured by Reiko)
TEC BARRIER: PET film silica-deposition-treated on one side (Product name: TEC BARRIER TXR, manufactured by Mitsubishi Plastics)
A-OP: Oriented polypropylene film coated with polyvinyl alcohol on one side (Product name: A-OPBH, manufactured by Mitsui Chemicals Tohcello)
EMBLEM: Oriented nylon film coated with polyvinylidene chloride on one side (Product name: EMBLEM-DC DCR, manufactured by Unitika)
BESELA: PET film coated with acrylic polymer on one side (Product name: BESELA ET140R, manufactured by Toppan Printing)
IB-PET: Alumina-deposition-treated PET film (Product name: IB-PET-PUB, manufactured by Dainippon Printing)
GL: PET film alumina-deposition-treated on one side (Product name: GL-ARH, manufactured by Toppan Printing)

As shown in Table 2, the ink compositions for film printing pertaining to the Examples produced good results in all of adhesion property, printability characteristics, and retortability.

On the other hand, the ink compositions for film printing pertaining to the Comparative Examples failed to produce good results in any of adhesion property, printability characteristics, and retortability.

### Industrial Field of Application

Use of the ink composition for film printing proposed by the present invention ensures good printability characteristics, adhesion property, and retortability when the ink composition is printed on various gas barrier films, and it also ensures good laminatability when the ink composition is laminated.

## Claims

1. An ink composition for film printing containing a white pigment, a binder resin, and an organic solvent, wherein the white pigment is titanium oxide, the binder resin contains a polyurethane resin (A) and a "vinyl chloride-vinyl acetate"-based copolymer resin (B); the polyurethane resin (A) contains a polyurethane resin that has a hydroxyl group and also has at its end at least one amino group selected from primary amino group, secondary amino group, and tertiary amino group; (A)/(B) = 70/30 to 60/40 (ratio by mass); and the film contains at least one layer selected from alumina layer, silica layer, polyvinyl alcohol layer, polyvinylidene chloride layer, and acrylic polymer layer.

2. The ink composition for film printing according to claim 1, wherein the amine value of the polyurethane resin (A) is 0.1 to 10 mgKOH/g.

3. The ink composition for film printing according to claim 1 or 2, wherein the organic solvent is a mixed solvent constituted by ester-based organic solvent, alcohol-based organic solvent, and ketone-based organic solvent.

4. The ink composition for film printing according to claim 1 or 2, wherein the organic solvent is a mixed solvent constituted by ester-based organic solvent and alcohol-based organic solvent.

5. A printed matter obtained by printing the ink composition for film printing according to any one of claims 1 to 4, on the film.

6. A laminated product obtained by printing the ink composition for film printing according to any one of claims 1 to 4, on the film, and then laminating the printed film.

## Patentansprüche

1. Tintenzusammensetzung zum Filmdrucken, die ein weißes Pigment, ein Bindemittel-Harz sowie ein organisches Lösungsmittel enthält, wobei das weiße Pigment Titanoxid ist, das Bindemittel-Harz ein Polyurethan-Harz (A) sowie ein Copolymer-Harz (B) auf Basis von "Vinylchlorid-Vinylacetat" enthält; das Polyurethan-Harz (A) ein Polyurethan-Harz enthält, das eine Hydroxylgruppe aufweist und an seinem Ende darüber hinaus wenigstens eine Aminogruppe aufweist, die aus einer primären Aminogruppe, einer sekundären Aminogruppe und einer tertiären Aminogruppe ausgewählt wird, wobei (A)/(B) = 70/30 bis 60/40 (Massenverhältnis); und der Film wenigstens eine Schicht enthält, die aus einer Aluminiumoxid-Schicht, einer Siliziumoxid-Schicht, einer Polyvinylalkohol-Schicht, einer Polyvinylidenchlorid-Schicht sowie einer Acrylpolymer-Schicht ausgewählt wird.

2. Tintenzusammensetzung zum Filmdrucken nach Anspruch 1, wobei die Aminzahl des Polyurethan-Harzes (A) 0,1 bis 10 mgKOH/g beträgt.

3. Tintenzusammensetzung zum Filmdrucken nach Anspruch 1 oder 2, wobei das organische Lösungsmittel ein gemischtes Lösungsmittel ist, das aus einem organischen Lösungsmittel auf Esterbasis, einem organischen Lösungsmittel auf Alkoholbasis und einem organischen Lösungsmittel auf Ketonbasis besteht.

4. Tintenzusammensetzung zum Filmdrucken nach Anspruch 1 oder 2, wobei das organische Lösungsmittel ein gemischtes Lösungsmittel ist, das aus einem organischen Lösungsmittel auf Esterbasis und einem organischen Lösungsmittel auf Alkoholbasis besteht.

5. Druckerzeugnis, das gewonnen wird, indem die Tintenzusammensetzung zum Filmdrucken nach einem der Ansprüche 1 bis 4 auf den Film aufgedruckt wird.

6. Laminiertes Produkt, das gewonnen wird, indem die Tintenzusammensetzung zum Filmdrucken nach einem der Ansprüche 1 bis 4 auf den Film aufgedruckt wird und anschließend der bedruckte Film laminiert wird.

## Revendications

1. Composition d'encre pour l'impression sur film contenant un pigment blanc, une résine liante et un solvant organique, dans laquelle le pigment blanc est de l'oxyde de titane, la résine liante contient une résine de polyuréthane (A) et une résine de copolymère (B) à base de « chlorure de vinyle-acétate de vinyle » ; la résine de polyuréthane (A) contient une résine de polyuréthane qui possède un groupe hydroxyle et qui possède également, à son extrémité, au moins un groupe amino choisi parmi un groupe amino primaire, un groupe amino secondaire et un groupe amino tertiaire ; (A)/(B) = 70/30 à 60/40 (rapport massique) ; et le film contient au moins une couche choisie parmi couche d'alumine, couche de silice, couche d'alcool polyvinylique, couche de chlorure de polyvinylidène et couche de polymère acrylique.

2. Composition d'encre pour l'impression sur film selon la revendication 1, dans laquelle la valeur d'amine de la résine de polyuréthane (A) va de 0,1 à 10 mgKOH/g.

3. Composition d'encre pour l'impression sur film selon la revendication 1 ou 2, dans laquelle le solvant organique est un solvant mixte constitué de solvant organique à base d'ester, solvant organique à base d'alcool et solvant organique à base de cétone.

4. Composition d'encre pour l'impression sur film selon la revendication 1 ou 2, dans laquelle le solvant organique est un solvant mixte constitué de solvant organique à base d'ester et de solvant organique à base d'alcool.

5. Matière imprimée obtenue en imprimant la composition d'encre pour l'impression sur film selon l'une quelconque des revendications 1 à 4, sur le film.

6. Produit stratifié obtenu en imprimant la composition d'encre pour l'impression sur film selon l'une quelconque des revendications 1 à 4, sur le film, et en stratifiant ensuite le film imprimé.
